# EUROPÄISCHE PATENTSCHRIFT

(11) **EP 4 371 409 B1**
(45) Veröffentlichungstag und Bekanntmachung des Hinweises auf die Patenterteilung: **13.08.2025**
(21) Anmeldenummer: 23401040.3
(22) Anmeldetag: 24.10.2023
(51) Int. Cl.: A01M 7/00, B05B 12/02, B05B 12/12

(54) **VERFAHREN ZUM AUSBRINGEN VON SPRITZMITTEL AUF EINER LANDWIRTSCHAFTLICHEN NUTZFLÄCHE UND LANDWIRTSCHAFTLICHE SPRITZEINRICHTUNG**
METHOD FOR APPLYING SPRAY MATERIAL TO AN AGRICULTURAL AREA AND AGRICULTURAL SPRAYING DEVICE
PROCÉDÉ D'ÉPANDAGE DE PRODUIT DE PULVÉRISATION SUR UNE SURFACE AGRICOLE ET DISPOSITIF DE PULVÉRISATION AGRICOLE

(30) Priorität: 16.11.2022 DE 102022130299
(43) Veröffentlichungstag der Anmeldung: 22.05.2024
(73) Patentinhaber: Amazonen-Werke H. Dreyer SE & Co. KG, 49205 Hasbergen (DE)
(72) Erfinder: Austermann, Stefan, 49205 Hasbergen (DE); Dreyer, Justus, 49205 Hasbergen (DE); Wessels, Thomas, 49205 Hasbergen (DE); Klemann, Timo, 49205 Hasbergen (DE); Stein, Florian, 49205 Hasbergen (DE); Trentmann, Markus, 49205 Hasbergen (DE)
(74) Vertreter: Heisel, Per-Christian

(56) Entgegenhaltungen:
- EP-A1- 3 649 857
- WO-A1-2021/213717
- DE-A1- 102007 036 870
- DE-A1- 102020 207 530

## Beschreibung

Die Erfindung betrifft ein Verfahren zum Ausbringen von Spritzmittel auf einer landwirtschaftlichen Nutzfläche mit einer landwirtschaftlichen Spritzeinrichtung gemäß dem Oberbegriff des Patentanspruches 1 und eine landwirtschaftliche Spritzeinrichtung gemäß dem Oberbegriff des Patentanspruches 9.

Auf dem Gebiet der Landwirtschaft sind eine Vielzahl von Varianten gezogener, angebauter und/oder selbstfahrender Arbeitsmaschinen bekannt. Hierzu zählen unter anderem Arbeitsmaschinen, welche wenigstens eine Spritzeinrichtung zum Ausbringen von Spritzmittel auf einer landwirtschaftlichen Nutzfläche umfassen. Derartige Arbeitsmaschinen können beispielsweise nach Art von Feldspritzen, Hackgeräten oder dergleichen ausgebildet sein.

Bei der Ausbringung bzw. Applikation des Spritzmittels auf der landwirtschaftlichen Nutzfläche ist es dabei von Vorteil, wenn das Spritzmittel in die unmittelbare Umgebung wenigstens einer jeweiligen Pflanze und/oder auf eine jeweilige Pflanze selbst abgegeben wird. Bei derartigen Pflanzen kann es sich je nach Anwendungsfall um Nutzpflanzen und/oder Unkräuter handeln. Dementsprechend kann es sich bei dem auszubringenden Spritzmittel um Pflanzenschutzmittel, Düngemittel, Schädlingsbekämpfungsmittel, Unkrautvernichtungsmittel oder dergleichen handeln.

In der modernen landwirtschaftlichen Praxis hat sich die Einzelpflanzenbehandlung und/oder die Ausbringung nach Art sogenannter Spot-Applikationen als besonders effektive und/oder wirksame Ausbringungsart bewährt.

Eine derartige landwirtschaftliche Spritzeinrichtung und/oder Ausbringung ist beispielsweise in den Druckschriften EP 3 650 124 A1, EP 3 811 778 A1 und/oder WO 2021/213717 A1 beschrieben. Demnach wird für wenigstens eine definierte, insbesondere punktuelle und/oder teilflächenspezifische, Zielfläche auf der Nutzfläche bzw. einer Pflanze eine Bedarfsmenge des Spritzmittels bestimmt und mittels wenigstens einem an einem Rahmen und/oder Spritzgestänge der Spritzeinrichtung angeordneten Ausbringelement, insbesondere nach Art einer Spot-Applikation, ausgebracht.

Darüber hinaus sind aus den Druckschriften WO 03/009682 A1 und/oder DE 10 2007 036 870 A1 Spritzeinrichtungen bekannt geworden, welche wenigstens eine der Spritzeinrichtung zugeordnete Verstelleinrichtung umfassen. Die Verstelleinrichtung ist dabei dazu eingerichtet, eine auf den Rahmen und/oder das Spritzgestänge bezogene Relativposition und/oder Relativausrichtung wenigstens eines Ausbringelements während der Ausbringung zu verändern.

Problematisch bei der Verwendung derartiger und/oder bestehender landwirtschaftlicher Spritzeinrichtungen sind die stetig ansteigenden Anforderungen hinsichtlich der zulässigen und/oder notwendigen Bedarfsmengen an Spritzmittel. Um diesen Anforderungen gerecht zu werden, werden Spritzeinrichtungen vermehrt mit besonders englumigen bzw.mit besonders klein dimensionierten Ausbringelementen, insbesondere Spritzdüsen und/oder Ventilen, ausgerüstet und/oder verwendet, beispielsweise ab Düsengrößen mit DG-01. Derartig klein dimensionierte bzw. englumigen Ausbringelemente sind jedoch besonders anfällig hinsichtlich Verstopfungen, Ablagerungen und/oder dergleichen.

Die der Erfindung zugrunde liegende Aufgabe besteht somit darin, eine landwirtschaftliche Spritzeinrichtung und/oder ein Verfahren zum Ausbringen von Spritzmittel bereitzustellen, bei dem die beschriebenen Nachteile des Stands der Technik zumindest teilweise beseitigt sind. Insbesondere besteht die Aufgabe darin, die Betriebssicherheit derartiger auf Einzelpflanzenbehandlungen und/oder Spot-Applikationen ausgelegter Spritzeinrichtung weiter zu erhöhen.

Diese Aufgabe wird erfindungsgemäß dadurch gelöst, dass eine an einer definierten Abgabeposition entlang der Nutzfläche, vom wenigstens einen Ausbringelement ausgegebene Abgabemenge des Spritzmittels, die Bedarfsmenge für die wenigstens eine, insbesondere punktuelle, Zielfläche überschreitet bzw. überschritten wird, wobei die Relativposition und/oder Relativausrichtung des wenigstens einen Ausbringelements an der Abgabeposition mittels der Verstelleinrichtung derart verstellt wird, dass eine auf der wenigstens einen Zielfläche applizierte Auftreffmenge bzw. eine Benetzungsmenge des Spritzmittels zumindest im Wesentlichen der Bedarfsmenge entspricht.

Die Erfindung macht sich die Erkenntnis zunutze, dass eine auf die Zielfläche tatsächlich applizierte Menge des Spritzmittels unter anderem von der Relativbewegung zwischen dem Ausbringelement, insbesondere der Spritzdüse, und der Zielfläche bzw. dem Boden abhängig ist. Bevorzugt ist Verstelleinrichtung dazu eingerichtet, das wenigstens eine Ausbringelement während der Ausbringung bzw. Überfahrt der Nutzfläche gegenüber dem Rahmen und/oder dem Spritzgestänge der Spritzeinrichtung zu bewegen und/oder zu verstellen. Die Relativbewegungen des wenigstens einen Ausbringelements werden dabei vorzugsweise während des gesamten Ausbringungsvorgangs wiederholt. Des Weiteren können die Relativbewegungen des Ausbringelements dabei regelmäßig, periodisch und/oder stoßweise ausgeführt werden. Die Verstelleinrichtung ist besonders bevorzugt dazu eingerichtet, das wenigstens eine Ausbringelement derart zu verstellen bzw. zu bewegen, dass eine für wenigstens eine, insbesondere punktuelle, Zielfläche zu große Abgabemenge des Spritzmittels auf mehreren vorgesehenen, insbesondere punktuellen, Zielflächen auftrifft bzw. appliziert wird. Somit werden erfindungsgemäß mit verhältnismäßig eher groß dimensionierten Ausbringelementen besonders kleine Bedarfsmengen an Spritzmittel auf mehreren Zielflächen erreicht. Die erfindungsgemäße Maßnahme hat somit den entscheidenden Vorteil, dass für derartige Anwendungen Ausbringelemente verwendbar sind, deren, insbesondere unter optimalen Betriebsbedingungen, erreichbaren Abgabemengen größer sind, als die eigentlich notwendigen Bedarfsmengen der zu benetzenden bzw. zu besprühenden Pflanzen. Auf der einen Seite sind derartige Spritzeinrichtungen somit in einem größeren Anwendungsbereich einsetzbar, während auf der anderen Seite, insbesondere aufgrund der verhältnismäßig groß dimensionierten Ausbringelemente, eine höhere Betriebssicherheit erreicht ist.

Unter einem Ausbringelement ist bevorzugt wenigstens eine Spritzdüse zu verstehen, welche dazu eingerichtet ist, das innerhalb der Spritzeinrichtung, insbesondere einem zugeordneten Vorratsbehälter, vorgehaltene Spritzmittel auf die Nutzfläche bzw. auf der Nutzfläche befindlicher Pflanzen auszubringen. Ein derartiges Ausbringelement bzw. eine derartige Spritzdüse kann insbesondere als Einzeldüse oder alternativ als Mehrfachdüsenkörper mit mehreren auswählbaren Spritzdüsen ausgebildet sein. Die Spritzeinrichtung weist besonders bevorzugt mehrere derartiger Ausbringelemente auf, wobei wenigstens eines der Ausbringelemente einzeln oder alternativ mehrere Ausbringelemente gemeinsam mittels der Verstelleinrichtung verstellbar sind.

Unter dem Begriff "Zielfläche" ist nachfolgend bevorzugt die mit Spritzmittel zu benetzende Oberfläche wenigstens einer Pflanze zu verstehen. Weiterhin kann darunter alternativ oder zusätzlich auch die Blattoberfläche eines oder mehrerer Blätter und/oder der Stängel wenigstens einer Pflanze verstanden werden. Weiterhin sind unter mehreren Zielflächen die Oberflächen unterschiedlicher Pflanzen und/oder unterschiedliche Bereiche wenigstens eines Blatts und/oder unterschiedliche Blätter wenigstens einer Pflanze zu verstehen.

Des Weiteren ist unter der Bedarfsmenge des Spritzmittels die für eine Zielfläche notwendige Menge des Spritzmittels zu verstehen, mit der die Zielfläche und/oder Pflanze zu benetzen ist. Die Bedarfsmenge kann dabei vor der Ausbringung in Abhängigkeit der Art, Größe und/oder dem Zustand der jeweiligen Pflanzen und/oder der Umgebungsbedingungen ermittelt werden. Die Bedarfsmenge kann alternativ oder zusätzlich anhand hinterlegter und/oder abrufbarer elektronischer Daten, beispielsweise anhand einer elektronisch hinterlegten und/oder abrufbaren Applikationskarte, vorgegeben und/oder bestimmt werden.

Unter einer Verstellung der Relativposition und/oder Relativausrichtung an der Abgabeposition ist eine Verstellung des Ausbringelements während der Abgabe bzw. Ausgabe des Spritzmittels zu verstehen. Mit anderen Worten wird das Ausbringelement dabei mittels der Verstelleinrichtung verstellt, während das Spritzmittel aus dem Ausbringelement, insbesondere der Spritzdüse, austritt. Alternativ oder zusätzlich kann darunter auch eine Verstellung des Ausbringelementes nach dem Abgeben bzw. Austreten des Spritzmittels verstanden werden, beispielsweise eine Rückstellung in eine Ausgangs und/oder Grundstellung.

In einer bevorzugten Ausführungsform des erfindungsgemäßen Verfahrens wird das wenigstens eine Ausbringelement mittels der Verstelleinrichtung derart verstellt, dass anhand der an der Abgabeposition abgegebenen Abgabemenge mehrere, vorzugsweise unmittelbar aneinander angrenzende, Zielflächen mit Spritzmittel appliziert werden. Die Abgabemenge entspricht dabei einer Summe der Bedarfsmengen unterschiedlicher Zielflächen. Mit anderen Worten ist dabei vorgesehen, dass mit der an einer bestimmten Abgabeposition abgegebenen Abgabemenge des Spritzmittels neben einem ersten Blatt einer Pflanze auch wenigstens ein weiteres Blatt der Pflanze, und/oder neben einer ersten Pflanze wenigstens eine weitere Pflanze benetzt wird. Insbesondere ist somit vorgesehen, dass sich die an der bestimmten Abgabeposition abgegebene Abgabemenge des Spritzmittels auf die unterschiedlichen Zielflächen aufteilt. Die zur Applikation vorgesehenen Zielflächen werden dabei vorzugsweise derart ausgewählt und/oder bestimmt, dass die Summe der unterschiedlichen Bedarfsmengen zumindest in etwa der unter optimalen Betriebsbedingungen erreichbaren Abgabemenge des wenigstens einen Ausbringelements entspricht.

Unter den optimalen Betriebsbedingungen sind insbesondere die Maschinen- und/oder Umgebungsparameter während der Ausbringung zu verstehen. Eine Betriebsbedingung bzw. ein Maschinenparameter kann dabei beispielsweise der eingestellte Spritzmitteldurck des Spritzmittels innerhalb der Spritzeinrichtung, insbesondere entlang der Spritzmittelleitungen und/oder an dem Ausbringelement sein. Alternativ oder zusätzlich kann die Betriebsbedingung bzw. ein Maschinenparameter die Fahr- und/oder Arbeitsgeschwindigkeit der Spritzeinrichtung sein. Ferner können unter den Betriebsbedingungen bzw. der Umgebungsparameter auch das Wetter, die Umgebungstemperatur, Luftfeuchtigkeit und/oder dergleichen verstanden werden.

Darüber hinaus ist vorzugsweise vorgesehen, dass das wenigstens eine Ausbringelement zumindest anhand einer definierten Fahr- und/oder Arbeitsgeschwindigkeit der Spritzeinrichtung und/oder einer der Spritzeinrichtung zugeordneten Zugmaschine resultierenden Relativgeschwindigkeit hinsichtlich der Nutzfläche geführt bzw. bewegt wird.

In einer Weiterbildung des erfindungsgemäßen Verfahrens ist die Verstelleinrichtung dazu eingerichtet, das wenigstens eine Ausbringelement derart zu verstellen, dass die Relativgeschwindigkeit zumindest temporär während der Ausgabe des Spritzmittels und/oder im Bereich der Abgabeposition erhöht wird. Die Relativgeschwindigkeit des Ausbringelements wird dabei bevorzugt temporär um ein Vielfaches der Fahrt- und/oder Arbeitsgeschwindigkeit erhöht. Mit anderen Worten setzt sich die Relativgeschwindigkeit des Ausbringelements wenigstens an temporär an der Abgabeposition bzw. dem Abgabeort zumindest aus der Fahrgeschwindigkeit und einer zusätzlichen von der Verstelleinrichtung hervorgerufenen Verstellgeschwindigkeit zusammen.

Die zumindest temporär durch die Verstelleinrichtung erhöhte Relativgeschwindigkeit des Ausbringelements hat ferner den entscheidenden Vorteil, dass der Spritzmitteldurck innerhalb der Spritzeinrichtung, insbesondere am Ausbringelement, somit weiter erhöht werden kann und so ein feineres Tropfenspektrum des abgegebenen Spritzmittels erreicht wird. Die optimalen Betriebsbedingungen für das Ausbringelement sind somit auch bei verhältnismäßig langsamer Fahrgeschwindigkeit einfacher zu erreichen.

In einer anderen bevorzugten Ausführungsform des erfindungsgemäßen Verfahrens wird das zumindest eine Ausbringelement während der Ausgabe des Spritzmittels, insbesondere während das Ausbringelement geöffnet ist, impuls- und/oder schwungartig mittels der Verstelleinrichtung verstellt. Mit anderen Worten wird das abgegebene Spritzmittel mittels der Verstelleinrichtung und/oder des Ausbringelements in Fahrtrichtung der Spritzeinrichtung zumindest teilweise nach vorne geworfen und/oder gestoßen.

In einer anderen Weiterbildung des erfindungsgemäßen Verfahrens ist die Verstelleinrichtung zur Verstellung des wenigstens einen Ausbringelements dazu eingerichtet, das wenigstens eine Ausbringelement gegenüber dem Rahmen und/oder dem Spritzgestänge zu verschieben und/oder zu verschwenken. **In** einer besonders bevorzugten Ausführungsform wird das wenigstens eine Ausbringelement um eine zumindest in etwa quer zur Fahrtrichtung ausgerichtete, vorzugsweise horizontale, Achse verschwenkt und/oder gedreht. Alternativ oder zusätzlich kann das Ausbringelement auch um eine zumindest in etwa zur Fahrtrichtung korrespondierenden Richtung verschoben werden. Ferner kann alternativ oder zusätzlich auch vorgesehen sein, dass auch das Spritzgestänge, insbesondere ein Gestängesegment, und/oder der Rahmen zumindest teilweise mittels der Verstelleinrichtung verstellbar, insbesondere verschwenkbar, sind.

In einer weiteren bevorzugten Ausführungsform des erfindungsgemäßen Verfahrens wird das wenigstens eine Ausbringelement mittels der Verstelleinrichtung in und/oder entgegen einer Fahrt- und/oder Arbeitsrichtung der Spritzeinrichtung verschoben und/oder verschwenkt. Alternativ oder zusätzlich kann dabei vorgesehen sein, dass das Ausbringelement während der Abgabe des Spritzmittels zumindest abschnittsweise entlang einer Kreisbogenbahn nach vorne und/oder hinten zur Fahrtrichtung gesehen verstellt wird.

In einer weiteren Weiterbildung des erfindungsgemäßen Verfahrens wird das wenigstens eine Ausbringelement mittels der Verstelleinrichtung in wiederholender und/oder periodischer Weise aus einer, vorzugsweise hinteren, Grundstellung in einer zur Fahrtrichtung der Spritzeinrichtung zumindest abschnittsweise korrespondierenden Richtung nach vorne verstellt und/oder bewegt. Somit wird das Ausbringelement mittels eine Rückstellung der Verstelleinrichtung, beispielsweise mittels Federkraft und/oder motorisch, nach dem impuls- und/oder stoßartigen Ausbringen des Spritzmittels zurück in die Grund- und/oder Ausgangsstellung verstellt. Das Ausbringelement wird dabei solange in der Grundstellung verbracht, bis das Spritzmittel erneut, insbesondere eine nächste Zielfläche bzw. die nächsten Zielflächen, abgegeben wird.

Darüber hinaus ist ein erfindungsgemäßes Verfahren bevorzugt, bei der die Verstelleinrichtung dazu eingerichtet ist, das wenigstens eine Ausbringelement während bzw. innerhalb eines Verstellvorgangs mit variierender Verstellgeschwindigkeit zu verstellen und/oder zu bewegen. Die Verstellgeschwindigkeit der Verstelleinrichtung und damit des wenigstens einen Ausbringelements kann sich hierbei entlang des Verstellwegs zumindest abschnittsweise unterscheiden. Beispielsweise wäre es denkbar, dass das Ausbringelement zu Beginn der Verstellung, insbesondere aus der Grundstellung heraus, mit höherer Verstellgeschwindigkeit verstellt wird, als zum Ende der Verstellung bzw. des Verstellwegs. Alternativ wäre es auch denkbar, dass die Verstellgeschwindigkeit zum Ende des Verstellwegs hin erhöht wird. Ferner wäre ebenso denkbar, dass die Verstellgeschwindigkeiten zu Beginn und am Ende des Verstellwegs zumindest in etwa gleich sind, während die Verstellgeschwindigkeit dazwischen variiert, insbesondere erhöht und/oder verringert wird. Mit anderen Worten weist die Verstellung des Ausbringelements innerhalb eines Verstellvorgangs unterschiedliche Verstellgeschwindigkeiten auf. Mit einer derartigen Ausführungsform kann die Benetzung der Zielfläche und damit das Ausbringergebnis noch weiter verbessert werden.

Die der Erfindung zugrunde liegende Aufgabe wird ebenso mit einer landwirtschaftlichen Spritzeinrichtung der eingangs genannten Art gelöst, wobei die landwirtschaftliche Spritzeinrichtung gemäß dem Anspruch 7 ausgebildet ist. Hinsichtlich der Vorteile und Modifikationen der erfindungsgemäßen landwirtschaftlichen Spritzeinrichtung wird zunächst auf die Vorteile und Modifikationen des erfindungsgemäßen Verfahrens verwiesen.

In einer bevorzugten Ausführungsform der erfindungsgemäßen landwirtschaftlichen Spritzeinrichtung umfasst die Spritzeinrichtung ein zugeordnetes Steuer- und/oder Regelsystem, mittels dem die Spritzeinrichtung dazu eingerichtet ist, das erfindungsgemäße Verfahren nach zumindest einem der zuvor beschriebenen bevorzugten Ausführungsformen auszuführen.

Weitere Einzelheiten der Erfindung sind der Beispielsbeschreibung und den Zeichnungen zu entnehmen. Die Zeichnungen zeigen
- Fig.1: ein verstellbares Ausbringelement während einem Ausbringvorgang in einer ersten Relativposition und in schematischer Seitenansicht;
- Fig.2: das Ausbringelement aus Fig.1 während der Abgabe von Spritzmittel in einer zweiten Relativposition;
- Fig.3: das Ausbringelement aus Fig.1 nach der Abgabe von Spritzmittel in einer dritte Relativposition; und
- Fig.4: das Ausbringelement aus Fig.1 nach der Abgabe von Spritzmittel in einer zurückgestellten Grundstellung.

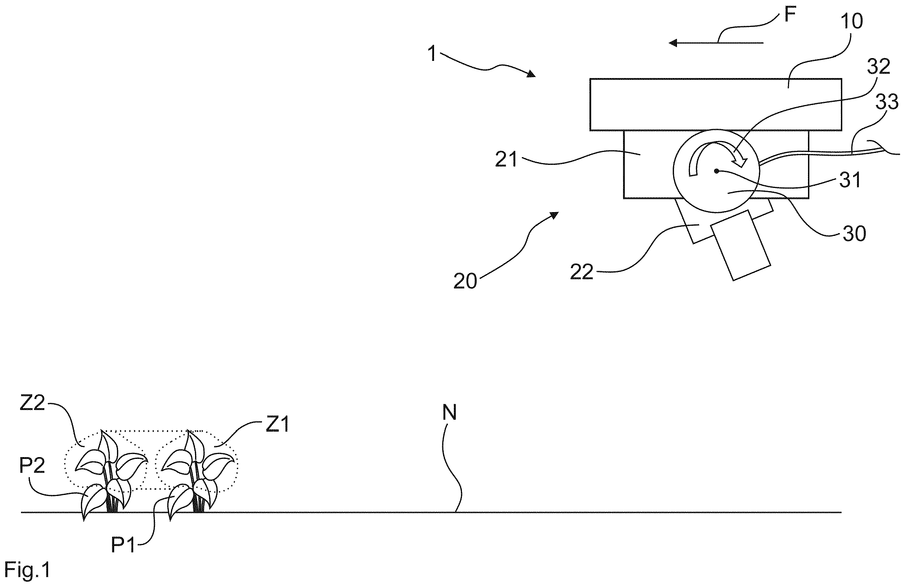

Ein an einer landwirtschaftlichen Spritzeinrichtung 1 angeordnetes Ausbringelement 20 zum Ausbringen von Spritzmittel S auf einer landwirtschaftlichen Nutzfläche N und/oder sich darauf befindlicher Pflanzen P1, P2 ist in der Fig.1 gezeigt.

Das Ausbringelement 20 ist hierbei an einem, insbesondere pendelnd gelagerten und/oder höhengeführten, Spritzgestänge 10 der Spritzeinrichtung 1 befestigt. Das Ausbringelement 20 kann alternativ oder zusätzlich auch an einem in der Ansicht nicht gezeigten Rahmen der Spritzeinrichtung 1 angeordnet sein. Weiterhin kann die Spritzeinrichtung 1 dabei zumindest als Teil einer landwirtschaftlichen Arbeitsmaschine ausgeführt sein. Die landwirtschaftliche Arbeitsmaschine kann dabei ferner als Pflanzenbehandlungs- und/oder Pflanzenpflegegerät, beispielsweise nach Art einer Feldspritze oder Hacke, ausgebildet sein.

Darüber hinaus kann die Arbeitsmaschine eine Vielzahl derartig ausgeführter Ausbringelemente 20 umfassen, welche insbesondere (quer zur Fahrtrichtung F) verteilt, am Spritzgestänge 10 angeordnet sind.

Wie in der Fig.1 ferner zu sehen ist, ist das Ausbringelement 20 nach Art einer Spritzdüse ausgebildet, bestehend aus wenigstens einem Halter 21 bzw. einem Düsenträger und einer beweglichen Düsenspitze 22 bzw. einem Düsenmundstück und/oder einer Düsenkappe. Alternativ oder zusätzlich dazu kann auch das gesamte Ausbringelement 20, insbesondere auch der Halter 21, beweglich ausgebildet sein. Ferner wäre es alternativ oder zusätzlich auch denkbar, wenn das Ausbringelement 20 selbst starr ausgebildet ist, während das Spritzgestänge 10 und/oder der (nicht gezeigte) Rahmen der Spritzeinrichtung 1 zumindest an der Position des wenigstens einen Ausbringelements 20 beweglich bzw. verstellbar ausgeführt ist.

Das beispielhaft als Einzel-Düse ausgebildete Ausbringelement 20 kann alternativ auch nach Art eines Mehrfachdüsenkörpers mit mehreren, insbesondere auswählbaren, Spritzdüsen ausgebildet sein, wobei die Spritzdüsen dabei einzeln oder gemeinsam beweglich bzw. verstellbar ausgebildet sein können.

Des Weiteren ist eine der Spritzeinrichtung 1 zugeordnete Verstelleinrichtung 30 zu erkennen, welche hier nach Art eines Aktors ausgebildet ist. Die Verstelleinrichtung 30 umfasst hierbei außerdem eine Signalleitung 33, über die der Aktor mit einem der Spritzeinrichtung 1 zugeordneten Steuer- und/oder Regelsystem verbunden ist. Die Verstelleinrichtung 30 ist hierbei ferner am Ausbringelement 20 angeordnet und/oder mit dem Ausbringelement gekoppelt und dazu eingerichtet, eine auf den (nicht gezeigten) Rahmen und/oder das Spritzgestänge 10 bezogene Relativposition und/oder Relativausrichtung des Ausbringelements 20 während der Ausbringung zu verändern.

Hierbei sei explizit erwähnt, dass der dargestellte elektrische Aktor nur beispielhaft ist und die Verstelleinrichtung 30 alternativ oder zusätzlich auch anhand eines mechanischen Getriebes und/oder pneumatisch ansteuerbar und/oder verstellbar ist.

Bei der Verwendung einer Mehrzahl solcher Ausbringelemente 20 an einer Spritzeinrichtung 1 wäre es auch denkbar, dass eine oder mehrere derartiger Verstellenrichtungen 30 jedem Ausbringelement 20 einzeln oder mehreren Ausbringelementen gemeinsam zugeordnet sind, beispielsweise auch zumindest einer Gruppe und/oder Teilbreite von Ausbringelementen 20.

Beim Annähern der Spritzeinrichtung 1 an eine oder mehrere auf der Nutzfläche N befindlicher Pflanzen P1, P2 befindet sich das jeweilige, insbesondere geschlossene und/oder deaktivierte, Ausbringelement 20 in einer ersten Relativposition und/oder Relativausrichtung zum Spritzgestänge 10, wie in der Fig.1 zu sehen ist. Dabei wird zunächst für eine definierte, insbesondere punktuelle, Zielfläche Z1, Z2 auf der Nutzfläche N, insbesondere einer Pflanze P1, P2, eine Bedarfsmenge des Spritzmittels S bestimmt. Die Bedarfsmenge kann dabei beispielsweise abrufbar, eingebbar und/oder anhand sensorischer Erfassung der Umgebung und/oder der Zielflächen Z1, Z2, insbesondere der Pflanzen P1, P2, bestimmbar sein.

Die mit Spritzmittel S zu applizierenden Pflanzen P1, P2 können je nach Anwendungsart beispielsweise Nutzpflanzen und/oder Unkräuter sein. Weiterhin kann das auszubringende Spritzmittel S ein Pflanzenschutzmittel, Düngemittel, Schädlingsbekämpfungsmittel und/oder Unkrautvernichtungsmittel sein. Das Spritzmittel S kann darüber hinaus in einem der Spritzeinrichtung 1 zugeordneten (in den Figuren nicht gezeigten) Vorratsbehälter vorgehalten und/oder angerührt werden. Alternativ oder zusätzlich kann das Spritzmittel S auch entlang eines Flüssigkeitenleitungssystems der Spritzeinrichtung 1 und/oder unmittelbar an den Ausbringelementen 20, beispielsweise anhand an sich bekannter Direkteinspeisesysteme, anmischbar sein.

Beim Annähern der Spritzeinrichtung 1, insbesondere des Ausbringelements 20, an die Pflanzen P1, P2 wird an einer definierten Abgabeposition entlang der Nutzfläche N eine definierte Abgabemenge des Spritzmittels S abgegeben bzw. appliziert. Erfindungsgemäß überschreitet die vom wenigstens einen Ausbringelement 20 ausgegebene Abgabemenge des Spritzmittels S dabei die eigentliche Bedarfsmenge für die wenigstens eine, insbesondere punktuelle, Zielfläche Z1, Z2. Während der Abgabe des Spritzmittels S wird die Relativposition und/oder Relativausrichtung des Ausbringelements 20 an der Abgabeposition mittels der Verstelleinrichtung 20 derart verstellt, dass eine auf der wenigstens einen Zielfläche Z1, Z2 applizierte Auftreffmenge des Spritzmittels S zumindest im Wesentlichen der Bedarfsmenge entspricht.

Das erfindungsgemäße Ausbringprinzip wird anhand der Darstellungen beispielhaft mit mehreren Zielflächen auf unterschiedlichen Pflanzen P1, P2 erläutert. Alternativ oder zusätzlich dazu können sich die Zielflächen auch auf ein und derselben Pflanzen P1, P2, z.B. auf P1, befinden. Die unterschiedlichen Zielflächen Z1, Z2 können sich dabei ferner auf ein und demselben Blatt und/oder auf unterschiedlichen Blättern der Pflanze P1, P2 befinden. Bei dem dargestellten Anwendungsprinzip handelt es sich insbesondere um eine Einzelpflanzenbehandlung und/oder eine sogenannte Spot-Applikation. Alternativ oder zusätzlich dazu wären als erfindungsgemäße Anwendungsarten auch Flächenbehandlungen und/oder Reihenbehandlungen (Band-Applikationen) oder dergleichen denkbar.

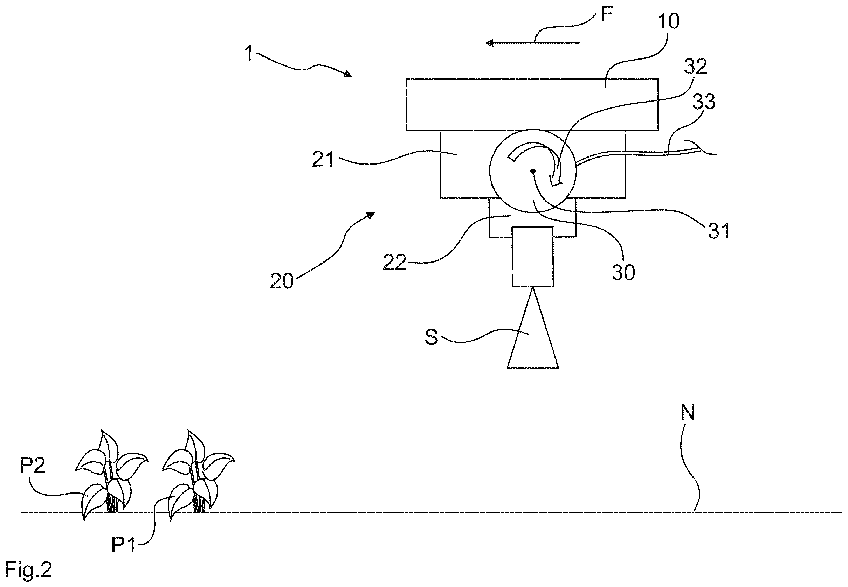

Im Folgenden wird anhand der Fig.2 - Fig.4 die Verstellung des Ausbringelements 20 näher erläutert. Der mit der Bezugsziffer 32 bezeichnete und schematisch dargestellte Pfeil, deutet dabei die Verstellrichtung 32 des Ausbringelements 20 durch die Verstellenrichtung 30 dar. Das Ausbringelement wird entweder selbstfahrend durch die Spritzeinrichtung 1 oder anhand einer zugeordneten Zugmaschine über die Nutzfläche N bewegt und/oder geführt. Anhand der Fahr- und/oder Arbeitsgeschwindigkeit der Spritzeinrichtung 1 und/oder der Zugmaschine resultiert zwischen dem Ausbringelement und der Nutzfläche, insbesondere der Pflanzen P1, P2 bzw. Zielflächen Z1, Z2, eine Relativgeschwindigkeit.

Die Fig.2 zeigt das Ausbringelement 20 in einer verstellten zweiten Relativposition und/oder Relativausrichtung gegenüber dem Spritzgestänge 10, bei dem sich die Spritzeinrichtung 1 und damit das Ausbringelement 20 weiter an die zu applizierenden Pflanzen P1, P2 angenähert hat. Des Weiteren ist zu sehen, dass während der Verstellung des Ausbringelements 20 das Spritzmittel 20 abgegeben wird und/oder aus dem Ausbringelement 20 austritt. Das Ausbringelement 20 ist in der zweiten Relativposition und/oder Relativausrichtung gegenüber der ersten Relativposition und/oder Relativausrichtung korrespondierend zur Fahrtrichtung F nach vorne hin verstellt und/oder zumindest im Wesentlichen senkrecht zum Boden der Nutzfläche N ausgerichtet.

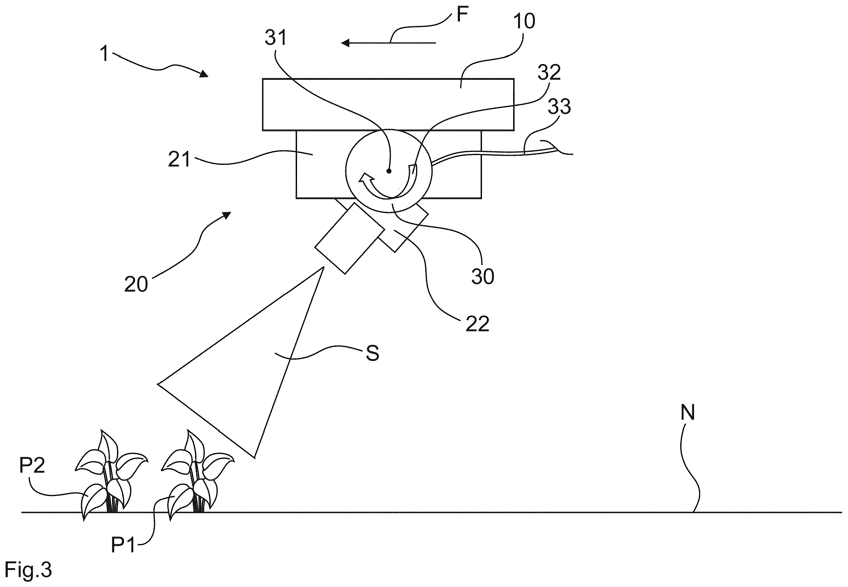

Die Fig.3 zeigt einen Zeitpunkt während des Ausbringens, bei dem die Spritzeinrichtung 1 und damit das Ausbringelement 20 noch weiter an die Pflanzen P1, P2 angenähert ist. Dabei ist das Ausbringelement 20 noch weiter nach vorne (korrespondierend zur Fahrtrichtung F) in eine dritte Relativposition und/oder Relativausrichtung verstellt. Insbesondere ist zu sehen, dass das Ausbringelement 20 dabei bereits verschlossen bzw. deaktiviert ist und sich das Spritzmittel S und/oder ein sich gebildeter Spritzfächer weiter vom Ausbringelement 20 zu den Pflanzen P1, P2 entfernt.

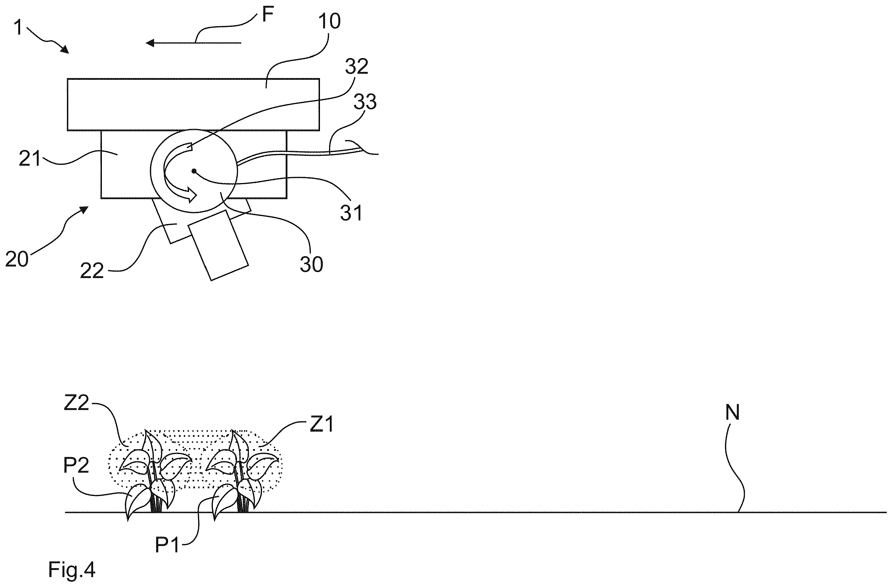

In der Fig.4 ist ein weiterer Zeitpunkt während des Ausbringens gezeigt, bei dem die Zielfächen Z1, Z2 und damit die Pflanzen P1, P2 mit dem abgegebenen Spritzmittel S benetzt sind. Das Ausbringelement 20 befindet sich dabei in einer von der Verstelleinrichtung 30 zurückgestellten Grund- und/oder Ausgangsstellung.

Anhand einer derartigen Ausbringung und/oder Verstellung des Ausbringelements werden mit einer einzelnen Abgabe des Spritzmittels S mehrere zu applizierende Zielflächen Z1, Z2 appliziert, welche insbesondere bei herkömmlicher Ausbringung bzw. Spot-Applikation anhand mehrere Abgaben mit Spritzmittel S appliziert und/oder benetzt werden.

Die dargestellte Verstelleinrichtung 20 ist insbesondere dazu eingerichtet, das Ausbringelement 20 derart zu verstellen, dass anhand der an der Abgabeposition abgegebenen Abgabemenge mehrere, insbesondere unmittelbar aneinander angrenzende, Zielflächen Z1, Z2 mit Spritzmittel S appliziert bzw. benetzt werden. Die Abgabemenge entspricht dabei einer Summe der Bedarfsmengen der unterschiedlichen Zielflächen. Insbesondere wird dies dadurch erreicht, dass die Relativgeschwindigkeit des Ausbringelements 20 zumindest temporär während der Ausgabe des Spritzmittels S und/oder im Bereich der Abgabeposition um ein Vielfaches der Fahrt- und/oder Arbeitsgeschwindigkeit erhöht wird.

Hierfür wird das Ausbringelement 20, während der Ausgabe des Spritzmittels S bzw. während das Ausbringelement 20 geöffnet und/oder aktiviert ist, impuls- und/oder schwungartig mittels der Verstelleinrichtung 30 verstellt oder bewegt. Das Ausbringelement 20 wird dabei ferner in wiederholender und/oder periodischer Weise aus einer, insbesondere hinteren, Grund- und/oder Ausgangsstellung in einer zur Fahrtrichtung F der Spritzeinrichtung 1 zumindest abschnittsweise korrespondierenden Richtung nach vorne verstellt und/oder bewegt.

Im gezeigten Ausführungsbeispiel ist die Verstelleinrichtung 30 hierfür dazu eingerichtet, das Ausbringelement 20 gegenüber dem (nicht gezeigten) Rahmen und/oder dem Spritzgestänge 10 (rotatorsich) zu verschwenken. Wie in den Figuren dargestellt, ist das Ausbringelement 20 hierbei um eine zumindest im Wesentlichen horizontal und zumindest in etwa quer zur Fahrtrichtung F ausgerichtete Verstell- und/oder Schwenkachse 31 verschwenkbar und/oder drehbar. Alternativ oder zusätzlich wären hierbei auch andere Bewegungsabläufe und/oder Verstellprinzipien denkbar. Die Verstelleinrichtung 30 kann beispielsweise alternativ oder zusätzlich auch dazu eingerichtet, das Ausbringelement 20 gegenüber dem (nicht gezeigten) Rahmen und/oder dem Spritzgestänge 10 (translatorisch) zu verschieben.

Darüber hinaus ist außerdem vorgesehen, dass die Verstelleinrichtung 30 dazu eingerichtet ist, das Ausbringelement 20 während bzw. innerhalb eines Verstellvorgangs mit variierender Verstellgeschwindigkeit und damit Relativgeschwindigkeit zu verstellen und/oder zu bewegen. Die Verstellgeschwindigkeit der Verstelleinrichtung 30 und damit des Ausbringelements 20 kann dabei entlang des Verstellwegs (angedeutet anhand Fig. 1 bis Fig.4) zumindest abschnittsweise anpassbar sein. Beispielsweise wäre es denkbar, dass das Ausbringelement 20 zu Beginn der Verstellung, insbesondere aus der Grundstellung heraus, mit höherer Verstellgeschwindigkeit verstellt wird, als zum Ende der Verstellung bzw. des Verstellwegs. Alternativ wäre es auch denkbar, dass die Verstellgeschwindigkeit zum Ende des Verstellwegs hin erhöht wird. Ferner wäre ebenso denkbar, dass die Verstellgeschwindigkeiten zu Beginn und am Ende des Verstellwegs zumindest in etwa gleich sind, während die Verstellgeschwindigkeit dazwischen variiert, insbesondere erhöht und/oder verringert wird. Mit anderen Worten weist die Verstellung des Ausbringelements 20 innerhalb eines Verstellvorgangs unterschiedliche Verstellgeschwindigkeiten auf.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 1: Spritzeinrichtung
- 10: Spritzgestänge
- 20: Ausbringelement
- 21: Halter
- 22: Düsenspitze
- 30: Verstelleinrichtung
- 31: Verstellachse
- 32: Verstellrichtung
- 33: Signalleitung

- F: Fahrtrichtung
- P1, P2: Pflanze
- N: Nutzfläche
- S: Spritzmittel
- Z1, Z2: Zielfläche

## Patentansprüche

1. Verfahren zum Ausbringen von Spritzmittel (S) auf einer landwirtschaftlichen Nutzfläche (N) mit einer landwirtschaftlichen Spritzeinrichtung (1), bei welchem für wenigstens eine definierte, insbesondere punktuelle, Zielfläche (Z1, Z2) auf der Nutzfläche (N), insbesondere einer Pflanze (P1, P2), eine Bedarfsmenge des Spritzmittels (S) bestimmt wird, und bei welchem das Spritzmittel (S) mittels wenigstens einem an einem Rahmen und/oder Spritzgestänge (10) der Spritzeinrichtung (1) angeordneten Ausbringelement (20), vorzugsweise nach Art einer Spot-Applikation, ausgebracht wird, wobei eine auf den Rahmen und/oder das Spritzgestänge (10) bezogene Relativposition und/oder Relativausrichtung des wenigstens einen Ausbringelements (20) während der Ausbringung mittels wenigstens einer zugeordneten Verstelleinrichtung (30) verändert wird, **dadurch gekennzeichnet, dass** eine an einer definierten Abgabeposition entlang der Nutzfläche (N) vom wenigstens einen Ausbringelement (20) ausgegebene Abgabemenge des Spritzmittels (S) die Bedarfsmenge für die wenigstens eine, insbesondere punktuelle, Zielfläche (Z1, Z2) überschreitet, wobei die Relativposition und/oder Relativausrichtung des wenigstens einen Ausbringelements (20) an der Abgabeposition mittels der Verstelleinrichtung (30) derart verstellt wird, dass eine auf der wenigstens einen Zielfläche (Z1, Z2) applizierte Auftreffmenge des Spritzmittels (S) zumindest im Wesentlichen der Bedarfsmenge entspricht.

2. Verfahren nach Anspruch 1, **dadurch gekennzeichnet, dass** das wenigstens eine Ausbringelement (20) mittels der Verstelleinrichtung (30) derart verstellt wird, dass anhand der an der Abgabeposition abgegebenen Abgabemenge mehrere, vorzugsweise unmittelbar aneinander angrenzende, Zielflächen (Z1, Z2) mit Spritzmittel (S) appliziert werden, wobei die Abgabemenge einer Summe der Bedarfsmengen der unterschiedlichen Zielflächen (Z1, Z2) entspricht.

3. Verfahren nach zumindest einem der vorgenannten Ansprüche 1 und/oder 2, wobei das wenigstens eine Ausbringelement (20) zumindest anhand einer Fahr- und/oder Arbeitsgeschwindigkeit der Spritzeinrichtung (1) und/oder einer der Spritzeinrichtung (1) zugeordneten Zugmaschine resultierenden Relativgeschwindigkeit hinsichtlich der Nutzfläche (N) geführt bzw. bewegt wird, **dadurch gekennzeichnet, dass** die Verstelleinrichtung (30) dazu eingerichtet ist, das wenigstens eine Ausbringelement (20) derart zu verstellen, dass die Relativgeschwindigkeit zumindest temporär während der Ausgabe des Spritzmittels (S) und/oder im Bereich der Abgabeposition, vorzugsweise um ein Vielfaches der Fahrt- und/oder Arbeitsgeschwindigkeit, erhöht wird.

4. Verfahren nach zumindest einem der vorgenannten Ansprüche 1 bis 3, **dadurch gekennzeichnet, dass** das zumindest eine Ausbringelement (20) während der Ausgabe des Spritzmittels (S), insbesondere während das Ausbringelement (20) geöffnet ist, impuls- und/oder schwungartig mittels der Verstelleinrichtung (30) verstellt wird.

5. Verfahren nach zumindest einem der vorgenannten Ansprüche 1 bis 4, **dadurch gekennzeichnet, dass** die Verstelleinrichtung (30) zur Verstellung des wenigstens einen Ausbringelements (20) dazu eingerichtet ist, das wenigstens eine Ausbringelement (20) gegenüber dem Rahmen und/oder dem Spritzgestänge (10) zu verschieben und/oder zu verschwenken.

6. Verfahren nach Anspruch 5, **dadurch gekennzeichnet, dass** das wenigstens eine Ausbringelement (20) mittels der Verstelleinrichtung (30) in und/oder entgegen einer Fahrt- und/oder Arbeitsrichtung der Spritzeinrichtung (1) verschoben und/oder verschwenkt wird.

7. Verfahren nach zumindest einem der vorgenannten Ansprüche 1 bis 6, **dadurch gekennzeichnet, dass** das wenigstens eine Ausbringelement (20) mittels der Verstelleinrichtung (30) in wiederholender und/oder periodischer Weise aus einer, vorzugsweise hinteren, Grundstellung in einer zur Fahrtrichtung (F) der Spritzeinrichtung (1) zumindest abschnittsweise korrespondierenden Richtung nach vorne verstellt und/oder bewegt wird.

8. Verfahren nach zumindest einem der vorgenannten Ansprüche 1 bis 7, **dadurch gekennzeichnet, dass** die Verstelleinrichtung (30) dazu eingerichtet ist, das wenigstens eine Ausbringelement (20) während bzw. innerhalb eines Verstellvorgangs mit variierender Verstellgeschwindigkeit zu verstellen und/oder zu bewegen.

9. Landwirtschaftliche Spritzeinrichtung (1) zum Ausbringen von Spritzmittel (S) auf einer landwirtschaftlichen Nutzfläche (N), insbesondere mit einem zugeordneten Steuer- und/oder Regelsystem, **dadurch gekennzeichnet, dass** die landwirtschaftliche Spritzeinrichtung (1), insbesondere das Steuer- und/oder Regelsystem, dazu eingerichtet ist, das Verfahren nach zumindest einem der vorgenannten Ansprüche 1 bis 8 auszuführen.

## Claims

1. Method for applying spraying agent (S) to an agricultural use area (N) using an agricultural spraying device (1), in which a required quantity of the spraying agent (S) is determined for at least one defined, in particular punctiform, target area (Z1, Z2) on the use area (N), in particular a plant (P1, P2), and in which the spraying agent (S) is applied by means of at least one application element (20) arranged on a frame and/or spray boom (10) of the spraying device (1), preferably in the manner of a spot application, a relative position and/or relative orientation of the at least one application element (20) with respect to the frame and/or the spray boom (10) being changed during application by means of at least one associated adjusting device (30), **characterized in that** a discharge quantity of the spraying agent (S) applied by the at least one application element (20) at a defined discharge position along the use area (N) exceeds the required quantity for the at least one, in particular punctiform, target area (Z1, Z2), the relative position and/or relative orientation of the at least one application element (20) at the discharge position being adjusted by means of the adjusting device (30) such that an impact quantity of the spraying agent (S) applied to the at least one target area (Z1, Z2) corresponds at least substantially to the required quantity.

2. Method according to claim 1, **characterized in that** the at least one application element (20) is adjusted by means of the adjusting device (30) such that, on the basis of the discharge quantity discharged at the discharge position, a plurality of target areas (Z1, Z2), preferably directly adjacent to one another, are applied with spraying agent (S), the discharge quantity corresponding to a sum of the required quantities of the different target areas (Z1, Z2).

3. Method according to at least one of the preceding claims 1 and/or 2, wherein the at least one application element (20) is guided or moved with respect to the use area (N) at least on the basis of a relative speed resulting from a traveling and/or working speed of the spraying device (1) and/or a tractor associated with the spraying device (1), **characterized in that** the adjusting device (30) is designed to adjust the at least one application element (20) such that the relative speed is increased at least temporarily during the application of the spraying agent (S) and/or in the region of the discharge position, preferably by a multiple of the traveling and/or working speed.

4. Method according to at least one of the preceding claims 1 to 3, **characterized in that** the at least one application element (20) is adjusted in a pulsed and/or oscillating manner by means of the adjusting device (30) during the application of the spraying agent (S), in particular while the application element (20) is open.

5. Method according to at least one of the preceding claims 1 to 4, **characterized in that** the adjusting device (30) for adjusting the at least one application element (20) is designed to move and/or pivot the at least one application element (20) relative to the frame and/or the spray boom (10).

6. Method according to claim 5, **characterized in that** the at least one application element (20) is moved and/or pivoted by means of the adjusting device (30) in and/or against a traveling and/or working direction of the spraying device (1).

7. Method according to at least one of the preceding claims 1 to 6, **characterized in that** the at least one application element (20) is repetitively and/or periodically adjusted and/or moved forwards by means of the adjusting device (30) from a, preferably rear, basic position in a direction corresponding at least in sections to the traveling direction (F) of the spraying device (1).

8. Method according to at least one of the preceding claims 1 to 7, **characterized in that** the adjusting device (30) is designed to adjust and/or move the at least one application element (20) during or within an adjusting process with varying adjustment speed.

9. Agricultural spraying device (1) for applying spraying agent (S) to an agricultural use area (N), in particular comprising an associated control and/or regulating system, **characterized in that** the agricultural spraying device (1), in particular the control and/or regulating system, is designed to carry out the method according to at least one of the preceding claims 1 to 8.

## Revendications

1. Procédé d'épandage d'un produit de pulvérisation (S) sur une surface agricole utile (N) comportant un dispositif de pulvérisation (1) agricole, dans lequel une quantité requise du produit de pulvérisation (S) est déterminée pour au moins une surface cible (Z1, Z2) définie, en particulier ponctuelle, sur la surface utile (N), en particulier une plante (P1, P2), et dans lequel le produit de pulvérisation (S) est épandu au moyen d'au moins un élément d'épandage (20) disposé sur un cadre et/ou une rampe de pulvérisation (10) du dispositif de pulvérisation (1), de préférence à la manière d'une application localisée, dans lequel une position relative et/ou une orientation relative de l'au moins un élément d'épandage (20) par rapport au cadre et/ou à la rampe de pulvérisation (10) sont modifiées pendant l'épandage au moyen d'au moins un dispositif de réglage (30) associé, **caractérisé en ce qu'**une quantité de distribution du produit de pulvérisation (S) délivrée au niveau d'une position de distribution définie le long de la surface utile (N) par l'au moins un élément d'épandage (20) dépasse la quantité requise pour l'au moins une surface cible (Z1, Z2), en particulier ponctuelle, dans lequel la position relative et/ou l'orientation relative de l'au moins un élément d'épandage (20) au niveau de la position de distribution sont réglées au moyen du dispositif de réglage (30) de telle sorte qu'une quantité d'impact du produit de pulvérisation (S) appliquée sur l'au moins une surface cible (Z1, Z2) correspond au moins sensiblement à la quantité requise.

2. Procédé selon la revendication 1, **caractérisé en ce que** l'au moins un élément d'épandage (20) est réglé au moyen du dispositif de réglage (30) de telle sorte qu'à l'aide de la quantité de distribution distribuée au niveau de la position de distribution, plusieurs surfaces cibles (Z1, Z2), de préférence directement adjacentes les unes aux autres, sont appliquées avec le produit de pulvérisation (S), dans lequel la quantité de distribution correspond à une somme des quantités requises des différentes surfaces cibles (Z1, Z2).

3. Procédé selon au moins l'une des revendications précédentes 1 et/ou 2, dans lequel l'au moins un élément d'épandage (20) est guidé ou déplacé par rapport à la surface utile (N) au moins à l'aide d'une vitesse relative résultant d'une vitesse de conduite et/ou de travail du dispositif de pulvérisation (1) et/ou d'une machine de traction associée au dispositif de pulvérisation (1), **caractérisé en ce que** le dispositif de réglage (30) est configuré pour régler l'au moins un élément d'épandage (20) de telle sorte que la vitesse relative est augmentée au moins temporairement pendant la distribution du produit de pulvérisation (S) et/ou dans la zone de la position de distribution, de préférence d'un multiple de la vitesse de conduite et/ou de travail.

4. Procédé selon au moins l'une des revendications précédentes 1 à 3, **caractérisé en ce que** l'au moins un élément d'épandage (20) est réglé par impulsions et/ou par balancement au moyen du dispositif de réglage (30) pendant la distribution du produit de pulvérisation (S), en particulier pendant que l'élément d'épandage (20) est ouvert.

5. Procédé selon au moins l'une des revendications précédentes 1 à 4, **caractérisé en ce que** le dispositif de réglage (30) pour le réglage de l'au moins un élément d'épandage (20) est configuré pour faire coulisser et/ou pivoter l'au moins un élément d'épandage (20) par rapport au cadre et/ou à la rampe de pulvérisation (10).

6. Procédé selon la revendication 5, **caractérisé en ce que** l'au moins un élément d'épandage (20) est coulissé et/ou pivoté au moyen du dispositif de réglage (30) dans une direction de conduite et/ou de travail du dispositif de pulvérisation (1) et/ou à l'opposé de celles-ci.

7. Procédé selon au moins l'une des revendications précédentes 1 à 6, **caractérisé en ce que** l'au moins un élément d'épandage (20) est réglé et/ou déplacé vers l'avant au moyen du dispositif de réglage (30) de manière répétitive et/ou périodique depuis une position de base, de préférence arrière, vers une direction correspondant au moins dans certaines sections à la direction de conduite (F) du dispositif de pulvérisation (1).

8. Procédé selon au moins l'une des revendications précédentes 1 à 7, **caractérisé en ce que** le dispositif de réglage (30) est configuré pour régler et/ou déplacer l'au moins un élément d'épandage (20) pendant ou durant un processus de réglage comportant une vitesse de réglage variable.

9. Dispositif de pulvérisation (1) agricole pour l'épandage d'un produit de pulvérisation (S) sur une surface agricole utile (N), en particulier comportant un système de commande et/ou de régulation associé, **caractérisé en ce que** le dispositif de pulvérisation (1) agricole, en particulier le système de commande et/ou de régulation, est configuré pour mettre en œuvre le procédé selon au moins l'une des revendications précédentes 1 à 8.
